# EUROPEAN PATENT APPLICATION

(11) **EP 4 439 627 A1**
(43) Date of publication of application: **02.10.2024**
(21) Application number: 22915473.7
(22) Date of filing: 19.10.2022
(51) Int. Cl.: H01J 65/00, B01J 19/12, C02F 1/32, H01J 61/35

(54) **FLUID TREATMENT DEVICE**

(30) Priority: 27.12.2021 JP 2021212285
(71) Applicant: Ushio Denki Kabushiki Kaisha, Tokyo 100-8150 (JP)
(72) Inventor: SHIGOKU, Minoru, Tokyo 100-8150 (JP); FUJISAWA, Shigeki, Tokyo 100-8150 (JP)
(74) Representative: Maiwald GmbH
(86) International application number: PCT/JP2022/038860
(87) International publication number: WO 2023/127238

(57) **Abstract**

Provided is a fluid treatment device that can efficiently proceed with ultraviolet irradiation to a treatment target fluid. A fluid treatment device includes an inner tube; an outer tube that is provided so as to surround the inner tube; a discharge space in which a discharge gas is filled in a space sandwiched between the inner tube and the outer tube; a first electrode and a second electrode that are configured to apply a voltage to the discharge space; a flow path that is provided inside the inner tube and through which a treatment target fluid flows. The flow path includes a fluid control part that guides the treatment target fluid so as to approach an inner peripheral wall of the inner tube.

## Description

### TECHNICAL FIELD

The present invention relates to a fluid treatment device, and more particularly to a device that performs treatment by irradiating a fluid with ultraviolet light.

### BACKGROUND ART

Conventionally, in order to decompose a trace amount of organic components (TOC: Total Organic Carbon) contained in a fluid, a device for decomposing the TOC in a solution by using ultraviolet light having a wavelength of 200 nm or less is known. For example, Patent Document 1 below describes a treatment device that causes a treatment target liquid to flow inside an excimer lamp and irradiates the liquid with ultraviolet light from the periphery of a flow path.

### PRIOR ART DOCUMENT

### PATENT DOCUMENT

Patent Document 1: JP-A-2017-188264 A

### SUMMARY OF THE INVENTION

### PROBLEMS TO BE SOLVED BY THE INVENTION

The excimer lamp of Patent Document 1 has a structure in which the discharge space is formed between the inner tube and the outer tube and the treatment target fluid flows through the inner tube. However, because the ultraviolet light has low transmittance, ultraviolet irradiation on the treatment target fluid cannot be efficiently proceeded.

The present invention has been made in view of the above problem, and an object of the present invention is to provide a fluid treatment device that can efficiently proceed with ultraviolet irradiation to a treatment target fluid.

### MEANS FOR SOLVING THE PROBLEMS

A fluid treatment device according to the present invention includes:
an inner tube;
an outer tube that is provided so as to surround the inner tube;
a discharge space in which a discharge gas is filled in a space sandwiched between the inner tube and the outer tube;
a first electrode and a second electrode that are configured to apply a voltage to the discharge space;
a flow path that is provided inside the inner tube and through which a treatment target fluid flows, in which
the flow path includes a fluid control part that guides the treatment target fluid so as to approach an inner peripheral wall of the inner tube.

According to this configuration, because the treatment target fluid can flow near the inner peripheral wall of the inner tube, the treatment target fluid is easily irradiated with ultraviolet light from the inner tube. As a result, the ultraviolet irradiation to the treatment target fluid can be efficiently proceeded.

Further, the fluid treatment device according to the present invention may have a configuration in which the flow path includes a flow path tube inserted through the inner tube.

According to this configuration, because the flow path tube is configured separately from the inner tube, the treatment target fluid does not come into contact with the inner tube, which allows the inner tube to be hardly affected by pressure and thermal change from the treatment target fluid.

Further, the fluid treatment device according to the present invention may have a configuration in which the flow path extends in a tube axis direction of the inner tube, and the fluid control part is inserted into the flow path and occupies a half or more of a cross-sectional area of the flow path when viewed in the tube axis direction.

According to this configuration, because the treatment target fluid in the flow path flows around the fluid control part, the treatment target fluid flows near the inner peripheral wall of the inner tube.

Further, the fluid treatment device according to the present invention may have a configuration in which the fluid control part is provided in 20% or more of a region of the flow path in the tube axis direction facing the discharge space.

According to this configuration, the function as the fluid control part is effectively exhibited.

Further, the fluid treatment device according to the present invention may have a configuration in which the fluid control part is a baffle plate intermittently provided in the tube axis direction.

According to this configuration, because the treatment target fluid is easily retained in the flow path by the baffle plate, the ultraviolet irradiation to the treatment target fluid can be efficiently proceeded.

Further, the fluid treatment device according to the present invention may have a configuration in which the inner tube and the flow path tube are disposed so as to have a gap therebetween.

According to this configuration, even in a case where the inner tube is thermally expanded or the flow path tube is expanded by water pressure, the load on both the inner tube and the flow path tube can be reduced.

Further, the fluid treatment device according to the present invention may have a configuration in which the outer tube is covered with an ultraviolet reflection part.

According to this configuration, the ultraviolet light radiated outward from the outer tube can be reflected toward the inner tube side, and the utilization efficiency of the ultraviolet light can be enhanced

Further, the fluid treatment device according to the present invention may have a configuration in which the first electrode is provided in the outer tube and the second electrode is provided in the inner tube, and a high voltage is applied to the second electrode and a low voltage is applied to the first electrode.

Because a high voltage is applied to the second electrode, the temperature of the second electrode becomes higher than that of the first electrode. However, because the second electrode loses heat by the treatment target fluid passing through the flow path facing thereto, the temperature of the second electrode as a whole is equalized, and an effect of reducing stress due to thermal expansion generated in the inner tube can be obtained.

Further, the fluid treatment device according to the present invention may have a configuration in which the fluid control part is formed with, at an end in the tube axis direction, a flow forming part that maintains a flow of the treatment target fluid.

According to this configuration, the treatment target fluid can be continuously treated.

Further, the fluid treatment device according to the present invention may have a configuration in which the flow path tube is longer than the inner tube and protrudes from both ends of the inner tube in the tube axis direction.

According to this configuration, the utilization efficiency of the ultraviolet light radiated from the inner tube can be enhanced. In addition, the flow path tube can be easily fixed at both ends of the inner tube.

Further, the fluid treatment device according to the present invention may have a configuration in which the flow path tube includes, respectively at both ends, corresponding one of a fluid introduction part and a fluid lead-out part, and
the fluid introduction part and the fluid lead-out part each have a flow path diameter smaller than a flow path diameter of the flow path tube.

According to this configuration, even in a case where the fluid control part movable in the tube axis direction is provided in the flow path tube, the movement of the fluid control part can be restricted by ends of the fluid introduction part and the fluid lead-out part.

Further, the fluid treatment device according to the present invention may have a configuration in which at least one of the fluid introduction part and the fluid lead-out part is provided with a recess recessed in a direction orthogonal to the tube axis direction of the flow path tube.

According to this configuration, even when a joint part is connected to each of the fluid introduction part and the fluid lead-out part, the joint part can be prevented from coming out of each of the fluid introduction part and the fluid lead-out part due to the pressure of the fluid.

Further, the fluid treatment device according to the present invention may have a configuration in which the outer tube is provided with, on an outer surface thereof, an attenuation part that attenuates ozone generation light.

According to this configuration, the resin-made joint part and the like can be prevented from being deteriorated due to the ozone generation light and ozone generated by the ozone generation light.

### BRIEF DESCRIPTION OF THE DRAWINGS

Fig. 1A is a schematic cross-sectional view of a fluid treatment device according to a first embodiment.
Fig. 1B is a perspective view of a fluid control part and a flow path tube.
Fig. 2 is a perspective view of a fluid control part and a flow path tube according to a second embodiment.
Fig. 3 is a perspective view of a fluid control part and a flow path tube according to a third embodiment.
Fig. 4 is a perspective view of a fluid control part and a flow path tube according to a fourth embodiment.
Fig. 5 is a perspective view of a fluid control part and a flow path tube according to a fifth embodiment.
Fig. 6 is a perspective view of a fluid control part and a flow path tube according to a sixth embodiment.
Fig. 7 is a perspective view of a fluid control part and a flow path tube according to a seventh embodiment.
Fig. 8 is a perspective view of a fluid control part and a flow path tube according to an eighth embodiment.
Fig. 9 is a perspective view of a fluid control part and a flow path tube according to a ninth embodiment.
Fig. 10 is a schematic cross-sectional view of a fluid treatment device according to a tenth embodiment.
Fig. 11 is a schematic cross-sectional view of a fluid treatment device according to an eleventh embodiment.

### MODE FOR CARRYING OUT THE INVENTION

Embodiments of a fluid treatment device according to the present invention will be described with reference to the drawings. Note that the following drawings are schematically illustrated, the dimensional ratios in the drawings do not necessarily coincide with the actual dimensional ratios, and the dimensional ratios do not necessarily coincide between the drawings.

### [First embodiment]

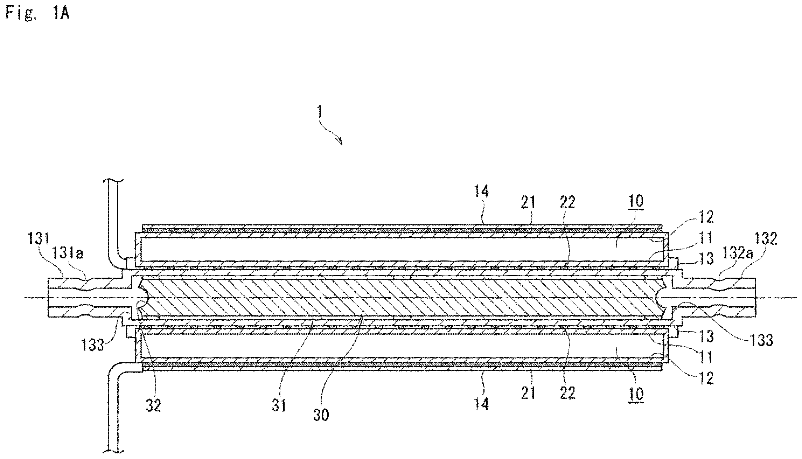

Fig. 1A is a schematic cross-sectional view of a fluid treatment device according to a first embodiment. The fluid treatment device 1 includes an inner tube 11 and an outer tube 12 provided so as to surround the inner tube 11. The fluid treatment device 1 also includes a flow path tube 13 inserted into the inner tube 11. The treatment target fluid flows through the flow path tube 13. Each of the inner tube 11, the outer tube 12, and the flow path tube 13 is made of quartz glass.

A discharge space 10 sandwiched between the inner tube 11 and the outer tube 12 is filled with a predetermined discharge gas. In the present embodiment, it is assumed that a closed space between the inner tube 11 and the outer tube 12 is filled with xenon gas as the discharge gas to form the discharge space.

A first electrode 21 is provided on an outer peripheral wall of the outer tube 12. A second electrode 22 is provided on an inner peripheral wall of the inner tube 11. The first electrode 21 is connected to the low voltage side of a power supply, and the second electrode 22 is connected to the high voltage side of the power supply. The second electrode 22 has a smaller area in contact with the discharge space 10 than the first electrode 21 and is connected to the high-voltage side of the power supply, and thus has a higher temperature than the first electrode 21. However, because the second electrode 22 loses heat by the fluid passing through the flow path tube 13 facing thereto, the temperature of the second electrode as a whole is equalized, and an effect of reducing stress due to thermal expansion generated in the inner tube can be obtained. This can further suppress the occurrence of thermal distortion of the inner tube 11.

When a predetermined voltage is applied between the first electrode 21 and the second electrode 22, a voltage is applied into the discharge space 10, and discharge plasma is generated. As the discharge gas, one that emits vacuum ultraviolet light having a wavelength of 200 nm or less by discharge when a voltage is applied is used. For example, when Xe gas is used as the discharge gas, Xe atoms in the discharge space 10 are excited by the plasma, and excimer excitation molecules Xe₂* are generated. Excimer emission is generated when the excitation molecule Xe₂* returns to the ground state. The Xe excimer light shows a spectrum having a peak at 172 nm.

The inner tube 11 and the outer tube 12 are cylindrical tubes. An outer diameter of the inner tube 11 is preferably 0.5 or more with respect to an inner diameter of the outer tube 12. As a result, because the thickness of the discharge space 10 can be reduced, the efficiency of taking ultraviolet light into the inner tube 11 is increased, and the flow path tube 13 can be efficiently irradiated with ultraviolet light.

The outer tube 12 is covered with an ultraviolet reflection part. This enables the ultraviolet light radiated outward from the outer tube 12 to be reflected toward the inner tube 11 side, and the utilization efficiency of the ultraviolet light to be enhanced. An example of the ultraviolet reflection part includes a reflection coating formed on the outer peripheral wall of the outer tube 12. However, the first electrode 21 may have a function of an ultraviolet reflection part.

In addition, the outer tube 12 is preferably provided with, on the outer surface of the outer tube 12, an attenuation part 14 that attenuates ozone generation light (ultraviolet light of 200 nm or less). Because ozone is generated by ozone generation light and oxygen, the attenuation part 14 is not particularly limited as long as the attenuation part 14 has a light shielding property such that ozone generation light does not come into contact with the outside air. An example of the attenuation part 14 includes one in which the outer surface of the outer tube 12 is coated with alumina or silica.

The first electrode 21 is made of a metal tape or the like. As described above, the first electrode 21 is preferably made of material that reflects ultraviolet light in order to have a function of the ultraviolet reflection part.

The second electrode 22 has a shape and is constituted of material that transmits ultraviolet light or has a small light shielding area. The second electrode 22 is constituted of metal having, for example, a net shape, a mesh shape, a coil shape, or the like.

The flow path tube 13 according to the present embodiment is not integrated with the inner tube 11 but is a separate member. By constituting the flow path tube 13 separately from the inner tube 11, the treatment target fluid does not come into contact with the inner tube 11, which allows the inner tube 11 not to be easily affected by pressure and thermal change from the treatment target fluid. In addition, the inner tube 11 is not supercooled by the treatment target fluid, and the influence of thermal distortion is also reduced. Furthermore, by separating the light emitting part (discharge space 10) and the flow part (flow path tube 13), even if the light emitting part is damaged, the treatment target fluid does not leak to the outside.

In a structure in which the inner tube 11 also serves as the flow path tube as in the conventional case, thick quartz glass needs to be used in order to enhance durability of the inner tube 11. However, although the durability can be enhanced as the glass thickness becomes larger, there is a problem that the transmittance of ultraviolet light is reduced. By forming the flow path tube 13 separately from the inner tube 11, the glass thickness of the inner tube 11 can be reduced, so that such a problem can be avoided.

A gap is provided between the flow path tube 13 and the inner tube 11. With this configuration, even in a case where the inner tube 11 is thermally expanded or the flow path tube 13 is expanded by water pressure, the load on both the inner tube and the flow path tube can be reduced. The second electrode 22 is disposed in a gap between the flow path tube 13 and the inner tube 11.

The flow path tube 13 is longer than the inner tube 11. The flow path tube 13 is disposed so as to protrude from both ends of the inner tube 11. With this configuration, the utilization efficiency of the ultraviolet light radiated from the inner tube 11 can be enhanced. In addition, the flow path tube 13 can be easily fixed at both ends of the inner tube 11.

The flow path tube 13 includes, respectively at both ends, corresponding one of a fluid introduction part 131 and a fluid lead-out part 132. Each of the fluid introduction part 131 and the fluid lead-out part 132 is a cylindrical tube. Tube diameters (flow path diameters) of the fluid introduction part 131 and the fluid lead-out part 132 are smaller than a tube diameter (flow path diameter) of the flow path tube 13. A not-illustrated joint part is connected to each of the fluid introduction part 131 and the fluid lead-out part 132. The flow path tube 13 includes a stepped part 133 connected to each of the fluid introduction part 131 and the fluid lead-out part 132.

The fluid introduction part 131 and the fluid lead-out part 132 are formed with, respectively on an outer peripheral wall portion, corresponding one of recesses 131a and 132a. The recessed recesses 131a and 132a are recessed in a direction orthogonal to the tube axis direction of the flow path tube 13. The recess 131a is formed along the circumferential direction of the fluid introduction part 131. The recess 132a is formed along the circumferential direction of the fluid lead-out part 132. With this configuration, the joint part can be prevented from coming out of each of the fluid introduction part 131 and the fluid lead-out part 132 due to the pressure of the fluid.

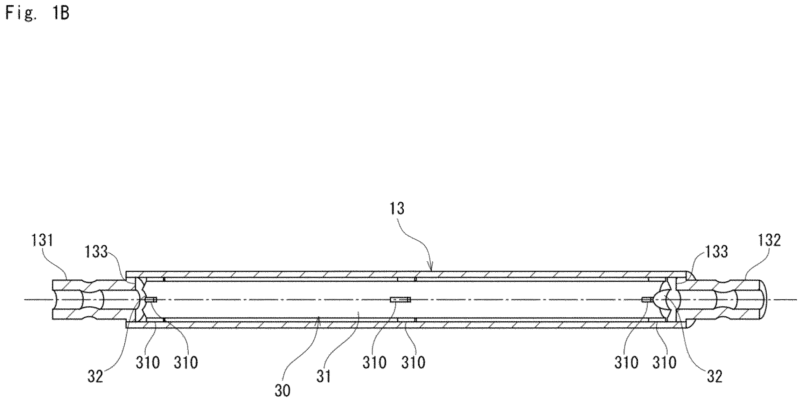

The flow path tube 13 is provided with, in the inside, a fluid control part 30 along the tube axis direction of the flow path tube 13. Fig. 1B is a perspective view of the fluid control part 30 and the flow path tube 13. Note that, in Fig. 1B, the flow path tube 13 is illustrated by cutting along the tube axis.

The fluid control part 30 has a function of guiding the treatment target fluid so as to approach the inner peripheral wall of the inner tube 11. By causing the treatment target fluid to flow near the inner peripheral wall of the inner tube 11, that is, near the inner peripheral wall of the flow path tube 13, the treatment target fluid is easily irradiated with ultraviolet light from the inner tube 11. In particular, in a case where ultraviolet light having a wavelength of 200 nm or less and ultraviolet light having a main wavelength of 172 nm are irradiated, the transmittance is extremely low. Therefore, in order to decompose and remove organic substances in the treatment target fluid, it is important to further shorten the light beam distance of ultraviolet light in the fluid.

Into the flow path tube 13, a main shaft 31 extending along the tube axis direction of the flow path tube 13 is inserted. The main shaft 31 is disposed substantially coaxially with the flow path tube 13. With this configuration, because the treatment target fluid in the flow path tube 13 flows around the main shaft 31, the treatment target fluid flows near the inner peripheral wall of the flow path tube 13. That is, in the first embodiment, the main shaft 31 corresponds to the fluid control part 30. The main shaft 31 is not fixed to the flow path tube 13 and is movable in the flow path tube 13.

The fluid control part 30 occupies preferably 1/2 or more, more preferably 2/3 or more of the cross-sectional area of the flow path tube 13 when viewed in the tube axis direction. In the first embodiment, an outer diameter of the main shaft 31 is 9 mm, and an inner diameter of the flow path tube 13 is 11 mm.

The fluid control part 30 is preferably provided in 20% or more, more preferably 40% or more, and particularly preferably 60% or more of a region of the flow path tube 13 in the tube axis direction facing the discharge space 10. By providing the fluid control part 30 in 20% or more of the region of the flow path tube 13 in the tube axis direction facing the discharge space 10, the function as the fluid control part 30 is effectively exhibited. The first embodiment is an example in which the fluid control part 30 (main shaft 31) is provided in a region of approximately 100% in the tube axis direction in the region facing the discharge space 10 of the flow path tube 13.

In addition, the main shaft 31 has a plurality of projections 310 projecting in the radial direction from the outer peripheral surface of the main shaft 31. The projection 310 is a projecting strip extending along the tube axis direction. The plurality of projections 310 are provided at the same position in the tube axis direction. In the present embodiment, four projections 310 are provided at equal intervals in the circumferential direction of the main shaft 31. The projections 310 are provided at three locations in the tube axis direction. Because the main shaft 31 has the plurality of projections 310, even when the projections 310 are in contact with the inner peripheral wall of the flow path tube 13, a gap can be formed between the outer peripheral surface of the main shaft 31 and the inner peripheral wall of the flow path tube 13.

The main shaft 31 has a flow groove 32 (an example of a flow forming part of the present invention) formed at an end in the tube axis direction. The flow groove 32 extends in a direction orthogonal to the tube axis direction and opens on the outer peripheral surface of the main shaft 31. With this configuration, even when an end surface of the main shaft 31 abuts on the stepped part 133, the outer peripheral surface and the end surface of the main shaft 31 communicate with each other. As a result, because the fluid introduction part 131 and the fluid lead-out part 132 always communicate with the gap between the outer peripheral surface of the main shaft 31 and the inner peripheral wall of the flow path tube 13 via the flow groove 32, the flow of the treatment target fluid is maintained.

### [Second embodiment]

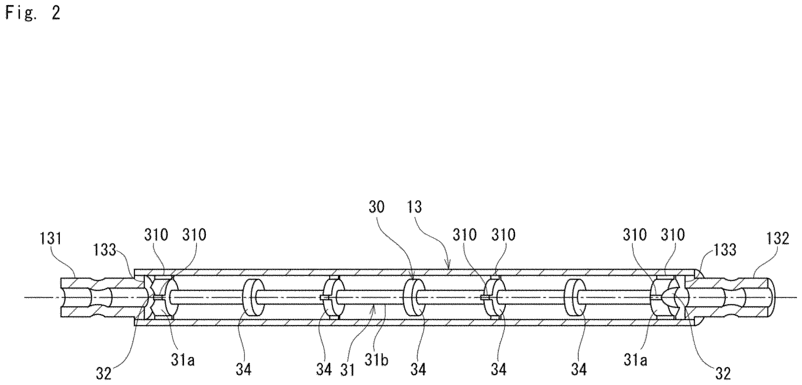

A second embodiment is the same as the first embodiment except for the configuration of a fluid control part 30, and thus a detailed description thereof will be omitted. Fig. 2 is a perspective view of the fluid control part 30 and a flow path tube 13 according to the second embodiment.

Into the flow path tube 13, a main shaft 31 extending along the tube axis direction of the flow path tube 13 is inserted, and the main shaft 31 includes a plurality of baffle plates 34 intermittently provided in the tube axis direction. In the second embodiment, five pieces of the baffle plates 34 are supported at equal intervals with respect to the main shaft 31.

The main shaft 31 is disposed substantially coaxially with the flow path tube 13. The main shaft 31 has both ends 31a and a center part 31b thinner than the both ends 31a. The baffle plate 34 is supported by the center part 31b. Both ends 31a have a plurality of projections 310 protruding in the radial direction. The both ends 31a are each provided with a flow groove 32.

The baffle plate 34 has a disk shape, and an outer diameter of the baffle plate 34 is smaller than an inner diameter of the flow path tube 13. Therefore, the treatment target fluid can flow through a gap formed between the outer peripheral surface of the baffle plate 34 and the inner peripheral wall of the flow path tube 13. That is, in the second embodiment, the baffle plate 34 corresponds to the fluid control part 30.

Further, the baffle plate 34 generates a turbulent flow in the treatment target fluid flowing in the flow path tube 13. With this configuration, the treatment target fluid can be easily retained in the flow path tube 13.

The fluid control part 30 occupies preferably 1/2 or more, more preferably 2/3 or more of the cross-sectional area of the flow path tube 13 when viewed in the tube axis direction. In the second embodiment, an outer diameter of the baffle plate 34 is 9 mm, and an inner diameter of the flow path tube 13 is 11 mm.

The outer diameter of the baffle plate 34 is substantially the same as an outer diameter of the both ends 31a. That is, the both ends 31a of the main shaft 31 can also function as the fluid control part 30. Further, the baffle plate 34 may have the plurality of projections 310 projecting in the radial direction similarly to the both ends 31a of the main shaft 31.

The fluid control part 30 is preferably provided in 20% or more, more preferably 40% or more, and particularly preferably 60% or more of a region of the flow path tube 13 in the tube axis direction facing the discharge space 10. By providing the fluid control part 30 in 20% or more of the region of the flow path tube 13 in the tube axis direction facing the discharge space 10, the function as the fluid control part 30 is effectively exhibited. Specifically, in the second embodiment, the sum of the lengths (thicknesses) of the plurality of baffle plates 34 in the tube axis direction and the lengths (thicknesses) of the both ends 31a of the main shaft 31 is preferably 20% or more of the length of the flow path tube 13 in the tube axis direction in the region facing the discharge space 10. In the second embodiment, the region of the fluid control part 30 can be easily adjusted by changing the thickness and the number of the baffle plates 34.

In addition, the main shaft 31 disposed substantially coaxially with the flow path tube 13 is preferably provided with a plurality of the fluid control parts 30 occupying 1/2 or more of the cross-sectional area of the flow path tube 13, and the fluid control part 30 is preferably provided in a region of 20% or more, more preferably in a region of 40% or more, and particularly preferably in a region of 60% or more in the longitudinal direction of the main shaft 31.

### [Third embodiment]

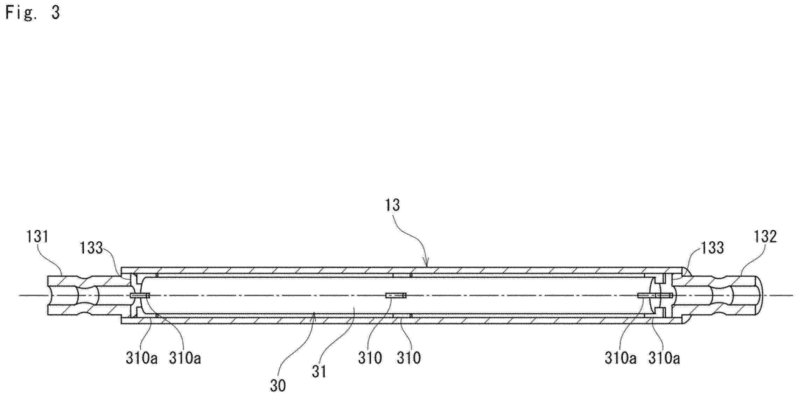

A third embodiment is the same as the first embodiment except for the configuration of a fluid control part 30, and thus a detailed description thereof will be omitted. Fig. 3 is a perspective view of the fluid control part 30 and a flow path tube 13 according to the third embodiment.

In the third embodiment, each of projections 310a provided at the tube axis direction end of a main shaft 31 extends outward beyond the end surface of the main shaft 31. With this configuration, even when an end surface of the main shaft 31 approaches a stepped part 133, because the projection 310a comes into contact with the stepped part 133, the outer peripheral surface and the end surface of the main shaft 31 communicate with each other. That is, the projection 310a of the third embodiment functions as the flow forming part.

### [Fourth embodiment]

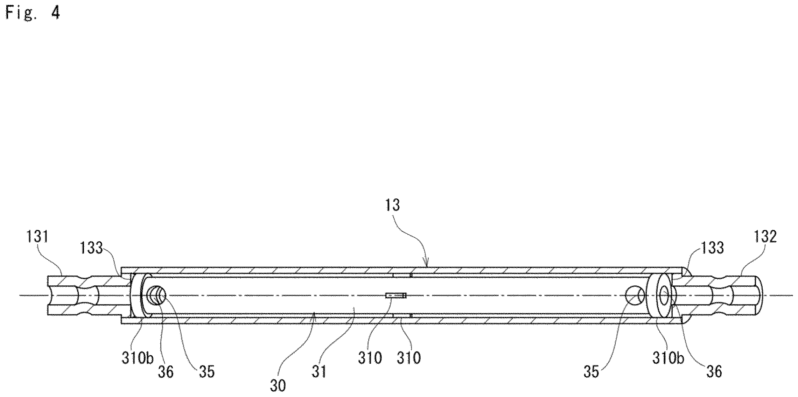

A fourth embodiment is the same as the first embodiment except for the configuration of a fluid control part 30, and thus a detailed description thereof will be omitted. Fig. 4 is a perspective view of the fluid control part 30 and a flow path tube 13 according to the fourth embodiment.

In the fourth embodiment, each of projections 310b provided at an end in the tube axis direction of a main shaft 31 is formed continuously in the circumferential direction of the main shaft 31 and has a ring shape.

In the vicinity of the end of the main shaft 31, a first hole 35 penetrating in a direction orthogonal to the tube axis direction is formed. In addition, a second hole 36 extending in the tube axis direction is formed at the center of the end surface of the main shaft 31. The second hole 36 communicates with the first hole 35. With this configuration, even when an end surface of the main shaft 31 abuts on the stepped part 133, the outer peripheral surface and the end surface of the main shaft 31 communicate with each other. That is, the first hole 35 and the second hole 36 of the fourth embodiment function as the flow forming part.

### [Fifth embodiment]

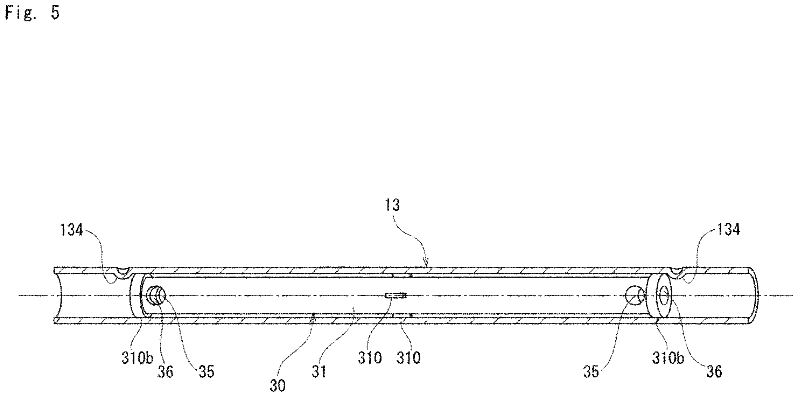

A fifth embodiment is the same as the fourth embodiment except for the configuration of a flow path tube 13, and thus a detailed description thereof will be omitted. Fig. 5 is a perspective view of a fluid control part 30 and the flow path tube 13 according to the fifth embodiment.

In the fifth embodiment, unlike the fourth embodiment, the flow path tube 13 does not include a fluid introduction part 131 and a fluid lead-out part 132 having a tube diameter smaller than that of the flow path tube 13 at both ends. Therefore, the flow path tube 13 does not include a stepped part 133 connected to each of the fluid introduction part 131 and the fluid lead-out part 132 neither. The movement of a main shaft 31 in the tube axis direction is restricted by the stepped part 133 in the fourth embodiment, but is restricted by a protrusion 134 formed on the inner peripheral wall of the flow path tube 13 in the fifth embodiment. The protrusion 134 is formed by heating the flow path tube 13 to be recessed from the outside.

### [Sixth embodiment]

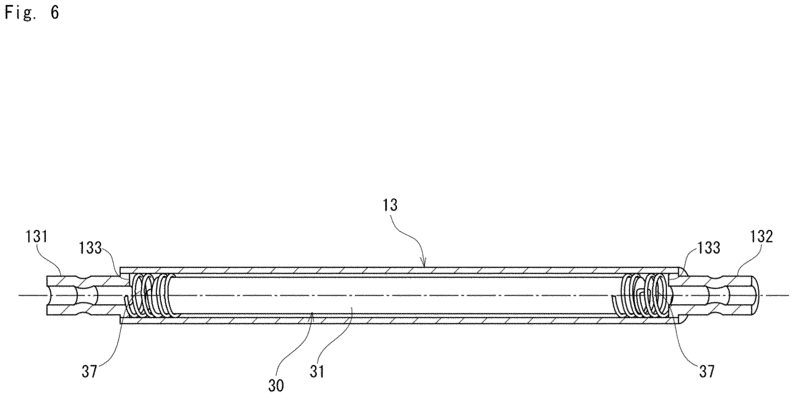

A sixth embodiment is the same as the first embodiment except for the configuration of a fluid control part 30, and thus a detailed description thereof will be omitted. Fig. 6 is a perspective view of the fluid control part 30 and a flow path tube 13 according to the sixth embodiment.

In the sixth embodiment, a main shaft 31 includes a coil 37 disposed at each of both ends of the main shaft 31. An inner diameter of the coil 37 is larger than an outer diameter of the main shaft 31, and an outer diameter of the coil 37 is smaller than an inner diameter of the flow path tube 13. With this configuration, the coil 37 functions as a spacer for forming a gap between the main shaft 31 and the inner peripheral wall of the flow path tube 13. The coil 37 is disposed so as to protrude from both end surfaces of the main shaft 31. With this configuration, even when an end surface of the main shaft 31 approaches a stepped part 133, because the coil 37 comes into contact with the stepped part 133, the outer peripheral surface and the end surface of the main shaft 31 communicate with each other. That is, the coil 37 functions as the flow forming part.

### [Seventh embodiment]

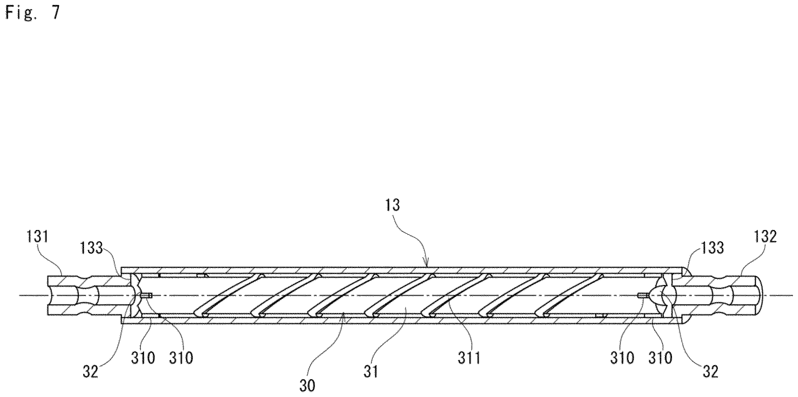

A seventh embodiment is the same as the first embodiment except for the configuration of a fluid control part 30, and thus a detailed description thereof will be omitted. Fig. 7 is a perspective view of the fluid control part 30 and a flow path tube 13 according to the seventh embodiment.

A main shaft 31 has a projecting strip 311 extending spirally on the outer peripheral surface of the main shaft 31. With this configuration, a path length of the fluid flowing between the outer peripheral surface of the main shaft 31 and the inner peripheral wall of the flow path tube 13 can be increased.

### [Eighth embodiment]

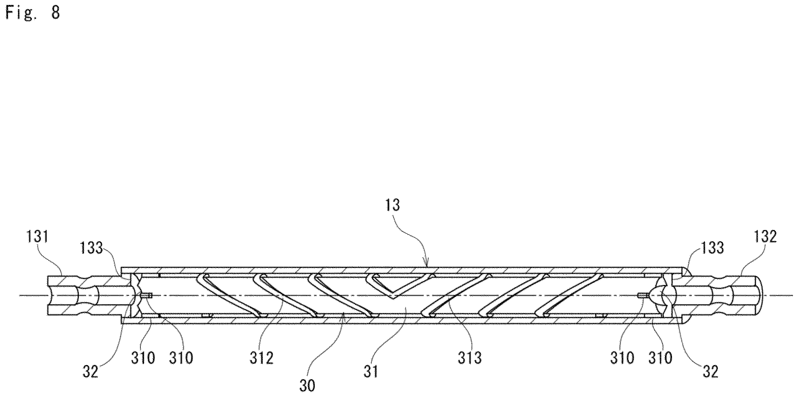

An eighth embodiment is the same as the seventh embodiment except for the configuration of a fluid control part 30, and thus a detailed description thereof will be omitted. Fig. 8 is a perspective view of the fluid control part 30 and a flow path tube 13 according to the eighth embodiment.

A main shaft 31 has a projecting strip 312 and a projecting strip 313 extending spirally on the outer peripheral surface of the main shaft 31. With this configuration, a path length of the fluid flowing between the outer peripheral surface of the main shaft 31 and the inner peripheral wall of the flow path tube 13 can be increased.

Further, the directions of the spirals of the projecting strip 312 and the projecting strip 313 are opposite to each other. With this configuration, when the treatment target fluid flows between the outer peripheral surface of the main shaft 31 and the inner peripheral wall of the flow path tube 13, the rotational force applied to the main shaft 31 generated by the flow along the projecting strip 312 and the rotational force applied to the main shaft 31 generated by the flow along the projecting strip 313 cancel each other, and thus, the rotation of the fluid control part 30 can be prevented.

### [Ninth embodiment]

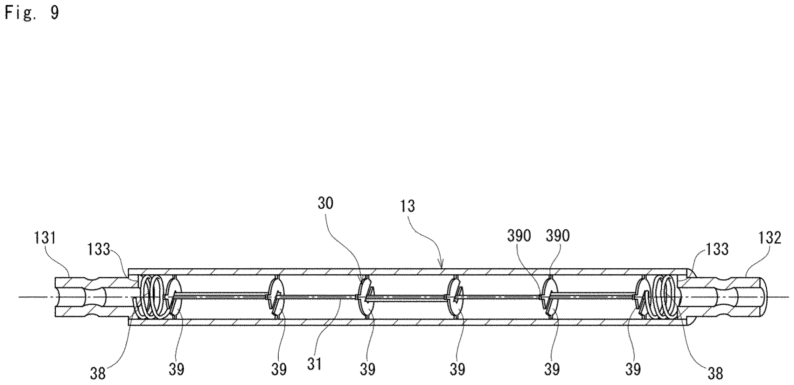

A ninth embodiment is the same as the first embodiment except for the configuration of a fluid control part 30, and thus a detailed description thereof will be omitted. Fig. 9 is a perspective view of the fluid control part 30 and a flow path tube 13 according to the ninth embodiment.

A coil 38 is connected to each of both ends of a main shaft 31. In the example in Fig. 9, the coil 38 is integrally formed with and is formed of the same wire material as the main shaft 31. In addition, a plurality of baffle plates 39 are supported by the main shaft 31. The baffle plate 39 is welded to, for example, the main shaft 31. The baffle plate 39 may have a plurality of projections 390 projecting in the radial direction.

The ninth embodiment is an example in which, because the thickness of the baffle plate 39 is thin, the total length in the tube axis direction of the fluid control part 30 (baffle plate 39) is less than 20% of the length in the tube axis direction in the region of the flow path tube 13 facing a discharge space 10. However, because the treatment target fluid is easily retained in the flow path tube 13 by the baffle plates 39, the ultraviolet irradiation to the treatment target fluid can be efficiently proceeded.

### [Tenth embodiment]

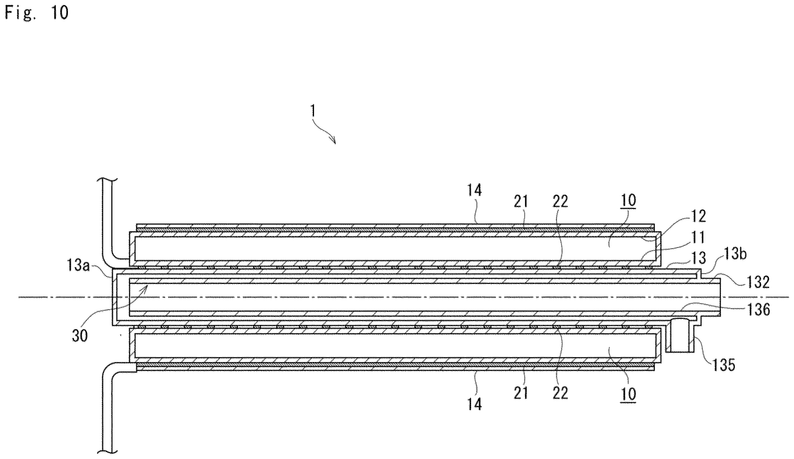

A tenth embodiment is the same as the first embodiment except for the configuration of a flow path tube 13 and a fluid control part 30, and thus a detailed description thereof will be omitted. Fig. 10 is a schematic cross-sectional view of a fluid treatment device 1 according to the tenth embodiment.

In the tenth embodiment, the fluid control part 30 is formed integrally with the flow path tube 13. The flow path tube 13 is a cylindrical tube having one end 13a closed and an other end 13b opened. A fluid lead-out part 132 is connected to the other end 13b of the flow path tube 13. Further, a fluid introduction part 135 is connected near the other end 13b of the flow path tube 13.

An auxiliary flow path tube 136 with both ends opened is disposed inside the flow path tube 13. The auxiliary flow path tube 136 is joined to the other end 13b of the flow path tube 13. A tube diameter of the auxiliary flow path tube 136 is equal to a tube diameter of the fluid lead-out part 132.

The treatment target fluid introduced from the fluid introduction part 135 flows toward the one end 13a of the flow path tube 13 through a gap between the flow path tube 13 and the auxiliary flow path tube 136. With this configuration, the treatment target fluid in the flow path tube 13 flows near the inner peripheral wall of the flow path tube 13. In other words, the auxiliary flow path tube 136 functions as the fluid control part 30 that guides the treatment target fluid so as to approach the inner peripheral wall of the inner tube 11. The treatment target fluid that has reached the one end 13a of the flow path tube 13 is led out from the fluid lead-out part 132 to the outside through the auxiliary flow path tube 136.

### [Eleventh embodiment]

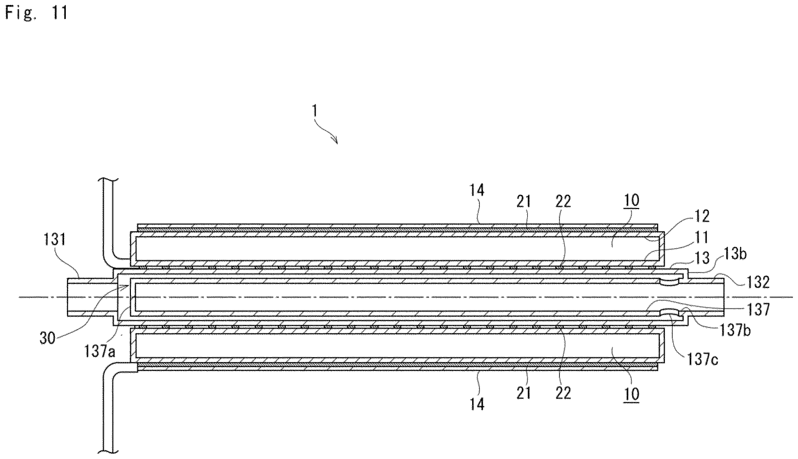

An eleventh embodiment is the same as the first embodiment except for the configuration of a flow path tube 13 and a fluid control part 30, and thus a detailed description thereof will be omitted. Fig. 11 is a schematic cross-sectional view of a fluid treatment device 1 according to the eleventh embodiment.

In the eleventh embodiment, an auxiliary flow path tube 137 having one end 137a closed and an other end 137b opened is disposed inside the flow path tube 13. The other end 137b of the auxiliary flow path tube 137 is joined to another end 13b of the flow path tube 13. In the auxiliary flow path tube 137, a through hole 137c is formed near the other end 137b.

The treatment target fluid introduced from a fluid introduction part 131 flows through a gap between the flow path tube 13 and the auxiliary flow path tube 137 toward the other end 13b of the flow path tube 13. With this configuration, the treatment target fluid in the flow path tube 13 flows near the inner peripheral wall of the flow path tube 13. In other words, the auxiliary flow path tube 137 functions as the fluid control part 30 that guides the treatment target fluid so as to approach the inner peripheral wall of the inner tube 11. The treatment target fluid that has reached the other end 13b of the flow path tube 13 flows into the auxiliary flow path tube 137 through the through hole 137c and is led out from a fluid lead-out part 132 to the outside.

While the embodiments of the present invention have been described above with reference to the drawings, it should be construed that specific configurations are not limited to the above embodiments. The scope of the present invention is indicated not only by the above description of the embodiments but also by the claims, and all changes which come within the meaning and range of equivalency of the claims are therefore intended to be embraced therein.

The structure adopted in each of the above embodiments can be adopted in any other embodiment. Specific configurations of parts are not restricted only to those in the above-described embodiments, and various modifications are possible within the scope of the gist of the present invention. In addition, the constituents, methods, and the like of various modified examples described below may be arbitrarily selected and employed as the constituents, methods, and the like of the above-described embodiments.

In the above embodiments, the flow path tube 13 is described as a separate member from the inner tube 11, but the present invention is not limited thereto. For example, the inner tube 11 may also serve as the flow path tube 13, that is, the treatment target fluid may be made to flow directly into the inner tube 11. At this time, the second electrode 22 is provided on the outer peripheral wall of the inner tube 11.

### DESCRIPTION OF REFERENCE SIGNS

- 1: Fluid treatment device
- 10: Discharge space
- 11: Innertube
- 12: Outer tube
- 13: Flow path tube
- 14: Attenuation part
- 21: First electrode
- 22: Second electrode
- 30: Fluid control part
- 31: Main shaft
- 32: Flow groove
- 34: Baffle plate
- 35: First hole
- 36: Second hole
- 37: Coil
- 38: Coil
- 39: Baffle plate
- 131: Fluid introduction part
- 131a: Recess
- 132: Fluid lead-out part
- 132a: Recess
- 133: Stepped part
- 134: Protrusion
- 135: Fluid introduction part
- 136: Auxiliary flow path tube
- 137: Auxiliary flow path tube
- 310: Projection
- 310a: Projection
- 310b: Projection
- 311: Projecting strip
- 312: Projecting strip
- 313: Projecting strip
- 390: Projection

## Claims

1. A fluid treatment device comprising:
an inner tube;
an outer tube that is provided so as to surround the inner tube;
a discharge space in which a discharge gas is filled in a space sandwiched between the inner tube and the outer tube;
a first electrode and a second electrode that are configured to apply a voltage to the discharge space; and
a flow path that is provided inside the inner tube and through which a treatment target fluid flows, wherein
the flow path includes a fluid control part that guides the treatment target fluid so as to approach an inner peripheral wall of the inner tube.

2. The fluid treatment device according to claim 1, wherein the flow path includes a flow path tube inserted through the inner tube.

3. The fluid treatment device according to claim 1, wherein the flow path extends in a tube axis direction of the inner tube, and the fluid control part is inserted into the flow path and occupies a half or more of a cross-sectional area of the flow path when viewed in the tube axis direction.

4. The fluid treatment device according to claim 3, wherein the fluid control part is provided in 20% or more of a region of the flow path in the tube axis direction facing the discharge space.

5. The fluid treatment device according to claim 3, wherein the fluid control part is a baffle plate intermittently provided in the tube axis direction.

6. The fluid treatment device according to claim 2, wherein the inner tube and the flow path tube are disposed so as to have a gap between the inner tube and the flow path tube.

7. The fluid treatment device according to claim 1, wherein the outer tube is covered with an ultraviolet reflection part.

8. The fluid treatment device according to claim 1, wherein the first electrode is provided in the outer tube and the second electrode is provided in the inner tube, and a high voltage is applied to the second electrode and a low voltage is applied to the first electrode.

9. The fluid treatment device according to claim 3, wherein the fluid control part is formed with, at an end in the tube axis direction, a flow forming part that maintains a flow of the treatment target fluid.

10. The fluid treatment device according to claim 2, wherein the flow path tube is longer than the inner tube and protrudes from both ends of the inner tube in the tube axis direction.

11. The fluid treatment device according to claim 2, wherein
the flow path tube includes, respectively at both ends, corresponding one of a fluid introduction part and a fluid lead-out part, and
the fluid introduction part and the fluid lead-out part each have a flow path diameter smaller than a flow path diameter of the flow path tube.

12. The fluid treatment device according to claim 11, wherein at least one of the fluid introduction part and the fluid lead-out part is provided with a recess recessed in a direction orthogonal to the tube axis direction of the flow path tube.

13. The fluid treatment device according to claim 1, wherein the outer tube is provided with, on an outer surface of the outer tube, an attenuation part that attenuates ozone generation light.
